# EUROPEAN PATENT SPECIFICATION

(11) **EP 2 422 091 B1**
(45) Date of publication and mention of the grant of the patent: **21.12.2016**
(21) Application number: 10707923.8
(22) Date of filing: 12.03.2010
(51) Int. Cl.: F04C 15/00, F16J 15/32

(54) **FUEL PUMP UNIT WITH REINFORCED SHAFT SEAL**
KRAFTSTOFFPUMPENEINHEIT MIT VERSTÄRKTER WELLENDICHTUNG
UNITÉ DE POMPAGE À CARBURANT AVEC JOINT D'ÉTANCHÉITÉ D'ARBRE RENFORCÉ

(30) Priority: 20.04.2009 IT MI20090652
(43) Date of publication of application: 29.02.2012
(73) Proprietor: Robert Bosch GmbH, 70442 Stuttgart (DE)
(72) Inventor: RIGLIETTI, Gaetano, I-70051 Barletta (BAT) (IT)
(86) International application number: PCT/EP2010/053157
(87) International publication number: WO 2010/121866

(56) References cited:
- EP-A2- 0 299 337
- FR-A1- 2 672 097
- GB-A- 811 835
- GB-A- 2 337 564

## Description

The present invention relates to a pump unit for feeding fuel, preferably diesel fuel, to an internal combustion engine.

In particular, the present invention relates to a pump unit comprising a pump body; a piston pump for feeding a fuel to an internal combustion engine; a gear pump for feeding the fuel to the piston pump; a drive shaft which is mounted such that it can rotate about its longitudinal axis and operate both the piston pump and the gear pump; and at least one annular gasket arranged between the pump body and the drive shaft for separating two chambers in a fluid-tight manner, one of these chambers being the pump chamber of the gear pump and the other being a chamber for lubricating at least some of the mechanical elements of the pump unit in relative movement. Such a pump is known from the document EP 0 299 377 A2.

The gasket usually has a substantially U-shaped cross section and comprises a sealing lip which is coupled to the drive shaft in a fluid-tight manner.

The high pressure of the fuel in the pump chamber means that the known pump units of the type described above have several disadvantages. These are mainly derived from the fact that the sealing lip is subjected, particularly during the start-up phase of such pump units, to a relatively high radial force, and this can result in relatively high wear on the drive shaft and/or on the sealing lip, relatively large deformations of the gasket and, in some cases, rupture of said sealing lip.

From the documents GB 811 835 A and FR 2 672 097 A1 gaskets are known which comprise at least one reinforcing element which is mounted at the gasket in order to at least limit the deformation of the gasket. However these reinforcing elements are part of the gasket and are not fixed in the place where the gasket is mounted. Therefore under high pressure the reinforcing ring and the gasket can move in the place where the gasket is mounted.

The object of the present invention is to provide a pump unit for feeding fuel, preferably diesel fuel, to an internal combustion engine, this pump unit not having any of the disadvantages mentioned above and being easy and inexpensive to produce.

The present invention provides a pump unit for feeding fuel, preferably diesel fuel, to an internal combustion engine, as claimed in the accompanying claims. The reinforcing element is retained in the groove of the pump body with its retaining ring and therefore the reinforcing element and the gasket are fixed in the pump body.

The present invention will be described below with reference to the appended drawings which show a non-limiting exemplary embodiment and in which:
Figure 1 shows a schematic sectional view, with parts removed for clarity, of a preferred embodiment of the pump unit of the present invention;
Figure 2 shows an exploded lateral view, with parts in section for clarity, of a detail of the pump unit shown in Figure 1;
Figure 3 shows an exploded perspective view of a detail from Figure 2; and
Figure 4 shows a front view of a detail from Figure 3.

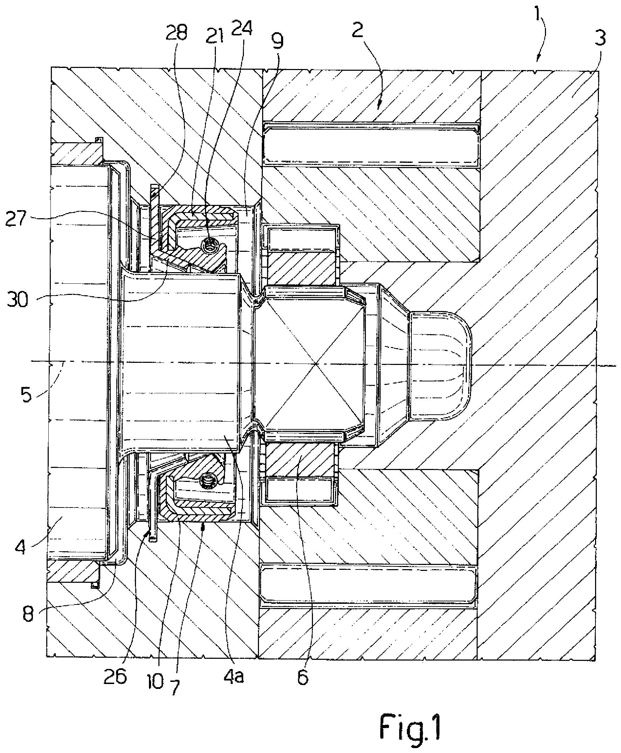

With reference to Figure 1,1 denotes, as a whole, a pump unit for feeding fuel, preferably diesel fuel, to an internal combustion engine (not shown).

The pump unit 1 comprises a known piston pump (not shown) which can feed the fuel to said internal combustion engine (not shown), a gear pump 2 of a known type which can feed the fuel to the piston pump (not shown), a pump body 3 common to the piston pump (not shown) and to the gear pump 2, and a drive shaft 4 which is mounted inside said pump body 3 such that it can rotate about its longitudinal axis 5, is fixed to an driving gear 6 of the pump 2, and comprises an eccentric driving part (not shown) of the piston pump (not shown).

Moreover, the pump unit 1 comprises an annular gasket 7 which is fitted on an intermediate part 4a of the shaft 4 coaxially with the axis 5 and extends between the pump body 3 and the shaft 4 in order to separate, in a fluid-tight manner, two annular chambers 8, 9 which are formed between the pump body 3 and the shaft 4 and of which the chamber 8 is a lubrication chamber which uses the fuel to lubricate at least some of the mechanical elements of the pump unit 1 in relative movement with respect to one another, and of which the chamber 9 is the pump chamber of the pump 2.

With regard to the foregoing, it is necessary to explain that the pressure of the fuel in the chamber 9 is usually higher than the pressure of the fuel in the chamber 8, particularly during the start-up phase of the pump unit 1.

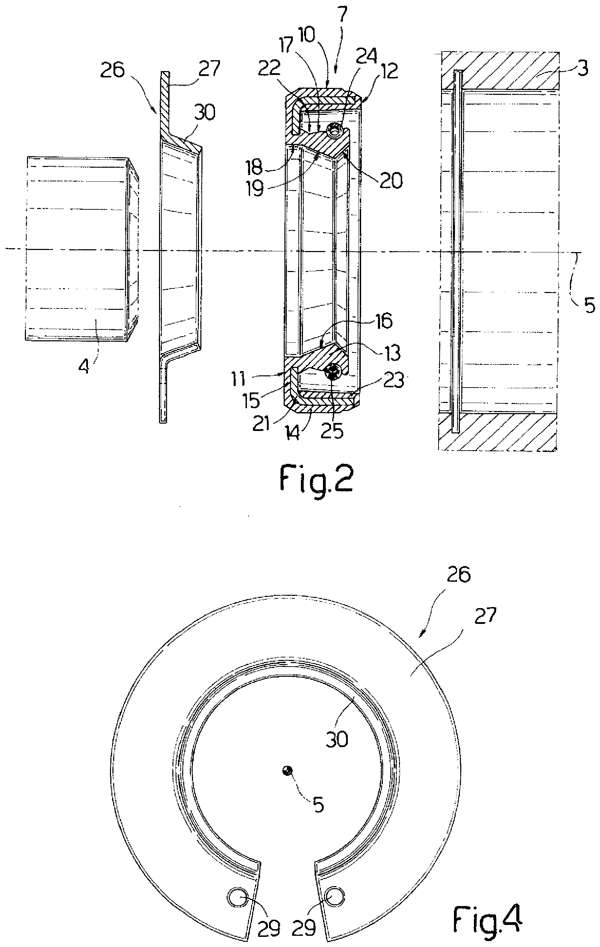

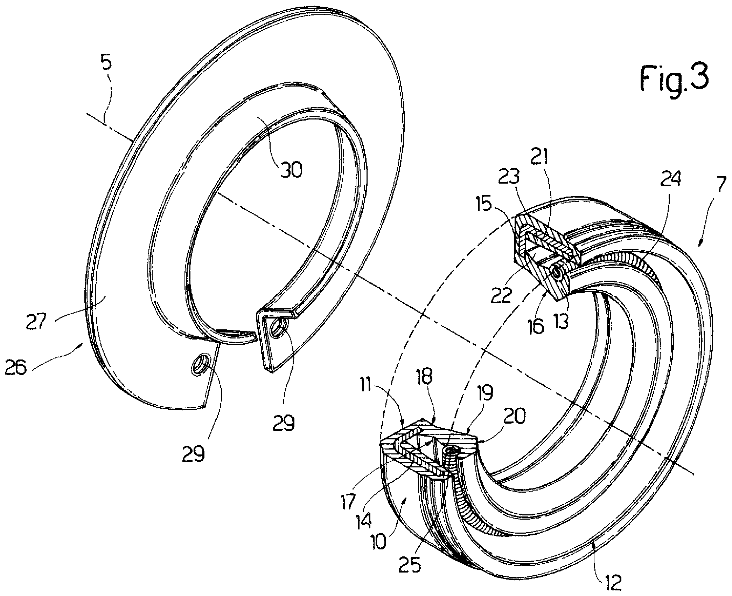

As shown in Figures 2 and 3, the gasket 7 comprises a sealing ring 10 which is made from elastomeric material, extends around the shaft 4, has a U-shaped cross section facing the chamber 9 and is axially delimited by two substantially planar surfaces 11, 12 which are orthogonal to the axis 5 and of which the surface 11 faces the chamber 8 and the surface 12 faces the chamber 9.

The ring 10 comprises an internal part 13 which is substantially parallel to the axis 5 and faces the shaft 4, an external part 14 which is substantially parallel to the axis 5 and faces the pump body 3, and an intermediate part 15 which is substantially orthogonal to said axis 5 and extends between the parts 13 and 14.

The part 13 is radially delimited by an internal surface 16 which faces the shaft 4 and by an external surface 17 which is opposite the surface 16 and faces the part 14.

Starting from the surface 11, the surface 16 comprises a substantially cylindrical portion 18, a substantially frustoconical portion 19 converging towards the axis 5 and a substantially frustoconical portion 20 diverging from said axis 5.

Moreover, the gasket 7 comprises an annular reinforcing element 21 which is produced, in this case, from metallic material, has a substantially L-shaped cross section with its concavity facing towards the part 13 and the chamber 9, and is held between the parts 13 and 14 in contact with the part 15 by an annular flange 22 protruding outwards from the surface 17 and by a folded strip 23 of the part 14 in contact with said element 21.

Finally, the gasket 7 comprises an annular spring 24 which extends around the part 13, is arranged in a substantially semi-cylindrical annular seat 25 formed in the surface 17 and can hold the gasket 7 radially tightly against the shaft 4.

With reference to Figure 1, the pump unit 1 also comprises a reinforcing element 26 arranged inside the chamber 8 in order to at least limit the deformation of the gasket 7, in particular of the part 13, resulting from the pressure difference which is normally present between the chambers 8 and 9.

As shown in Figures 3 and 4, the element 26 is in the form of an open ring, is elastically deformable in the circumferential direction, is fitted on the part 4a of the shaft 4 coaxially with the axis 5 and comprises a substantially planar retaining ring 27 which is attached in an annular groove 28 formed on an internal wall of the pump body 3 coaxially with said axis 5.

The ring 27 is arranged so as to substantially be in contact with the intermediate part 15 of the gasket 7, is produced, in this case, from metallic material and is provided with a pair of holes 29 which are each formed through a corresponding end of the ring 27, extend parallel to the axis 5 and allow the element 26 to deform elastically in order for the ring 27 to be inserted into the groove 28.

Moreover, the element 26 comprises a central collar 30 which protrudes axially from the ring 27, has a substantially frustoconical shape with a taper which is substantially equal to the taper of the internal part 13 of the gasket 7, and extends between the shaft 4 and said part 13. The part 13 is arranged so as to substantially be in contact with the collar 30 and protrudes axially from said collar 30 in order to be coupled to the shaft 4 in a fluid-tight manner.

Therefore, the element 26 makes it possible both to increase the robustness of the gasket 7 and, in particular, of the internal part 13 thereof and of the zone in which the parts 13 and 15 thereof are connected, and also to reduce the wear on the shaft 4 and on said part 13.

## Claims

1. Pump unit for feeding fuel, preferably diesel fuel, to an internal combustion engine, the pump unit comprising a pump body (3); a piston pump for feeding the fuel to the internal combustion engine; a gear pump (2) for feeding the fuel to the piston pump; a drive shaft (4) which is mounted such that it can rotate about its longitudinal axis (5) and operate both the piston pump and the gear pump (2); and at least one annular gasket (7) arranged between the pump body (3) and the drive shaft (4) for separating two chambers (8, 9) in a fluid-tight manner, the fuel being fed to at least one of these chambers; and said pump unit being **characterized by** the fact that it also comprises at least one reinforcing element (26) which is mounted inside one of the chambers (8, 9) in order to at least limit the deformation of the gasket (7) resulting from the pressure of the fuel and that the pump body (3) comprises a groove (28) which extends around said axis (5), the reinforcing element (26) comprising a retaining ring (27) which is attached in said groove (28) and a collar (30) which protrudes axially from the retaining ring (27) and extends between the drive shaft (4) and the gasket (7).

2. Pump unit according to Claim 1, in which the reinforcing element (26) is fastened to the pump body (3).

3. Pump unit according to Claim 1 or 2, in which the reinforcing element (26) extends between the drive shaft (4) and the gasket (7) in order to at least limit the radial deformations of said gasket (7).

4. Pump unit according to any one of the preceding claims, in which the pressure of the fuel in a first such chamber (9) is higher than the pressure of the fuel in a second such chamber (8), the reinforcing element (26) being arranged inside said second chamber (8).

5. Pump unit according to any one of the preceding claims, in which the reinforcing element (26) has a substantially annular shape.

6. Pump unit according to any one of the preceding claims, in which the reinforcing element (26) is in the form of an open ring which is elastically deformable in the circumferential direction.

7. Pump unit according to any one of the preceding claims, in which the gasket (7) is internally delimited by an at least partially substantially frustoconical surface (16) which faces the drive shaft (4), the collar (30) being in a substantially frustoconical form and extending between the drive shaft (4) and said surface (16).

8. Pump unit according to any one of the preceding claims, in which the gasket (7) protrudes axially from the collar (30) in order to be coupled to the drive shaft (4) in a fluidtight manner.

9. Pump unit according to any one of the preceding claims, in which the gasket (7) has a substantially U-shaped cross section.

## Patentansprüche

1. Pumpeneinheit zur Versorgung eines Verbrennungsmotors mit Kraftstoff, insbesondere Dieselkraftstoff, wobei die Pumpeneinheit umfasst: einen Pumpenkörper (3); eine Kolbenpumpe zur Versorgung des Verbrennungsmotors mit dem Kraftstoff; eine Zahnradpumpe (2) zur Versorgung der Kolbenpumpe mit dem Kraftstoff; eine Antriebswelle (4), die so montiert ist, dass sie sich um ihre Längsachse (5) drehen und sowohl die Kolbenpumpe als auch die Zahnradpumpe (2) antreiben kann; und mindestens eine ringförmige Dichtung (7), die zwischen dem Pumpenkörper (3) und der Antriebswelle (4) angeordnet ist, um zwei Kammern (8, 9) in einer fluiddichten Weise zu trennen, wobei der Kraftstoff mindestens einer dieser Kammern zugeleitet wird; und wobei die Pumpeneinheit durch die Tatsache gekennzeichnet ist, dass sie auch mindestens ein Verstärkungselement (26) umfasst, das im Inneren von einer der Kammern (8, 9) montiert ist, um die aus dem Druck des Kraftstoffs resultierende Verformung der Dichtung (7) mindestens zu begrenzen, und dass der Pumpenkörper (3) eine Nut (28) umfasst, die sich um die Achse (5) herum erstreckt, wobei das Verstärkungselement (26) einen Rückhaltering (27), der in der Nut (28) befestigt ist, und einen Kragen (30) umfasst, der vom Rückhaltering (27) aus axial vorspringt und sich zwischen der Antriebswelle (4) und der Dichtung (7) erstreckt.

2. Pumpeneinheit nach Anspruch 1, bei der das Verstärkungselement (26) am Pumpenkörper (3) befestigt ist.

3. Pumpeneinheit nach Anspruch 1 oder 2, bei der sich das Verstärkungselement (26) zwischen der Antriebswelle (4) und der Dichtung (7) erstreckt, um die radialen Verformungen der Dichtung (7) mindestens zu begrenzen.

4. Pumpeneinheit nach einem der vorstehend aufgeführten Ansprüche, bei der der Druck des Kraftstoffs in einer ersten derartigen Kammer (9) höher als der Druck des Kraftstoffs in einer zweiten derartigen Kammer (8) ist, wobei das Verstärkungselement (26) im Inneren der zweiten Kammer (8) angeordnet ist.

5. Pumpeneinheit nach einem der vorstehend aufgeführten Ansprüche, bei der das Verstärkungselement (26) eine im Wesentlichen ringförmige Form hat.

6. Pumpeneinheit nach einem der vorstehend aufgeführten Ansprüche, bei der das Verstärkungselement (26) die Form eines offenen Rings hat, der in der Umfangsrichtung elastisch verformbar ist.

7. Pumpeneinheit nach einem der vorstehend aufgeführten Ansprüche, bei der die Dichtung (7) intern durch eine mindestens teilweise im Wesentlichen kegelstumpfförmige Oberfläche (16) begrenzt ist, die der Antriebswelle (4) zugewandt ist, wobei der Kragen (30) eine im Wesentlichen kegelstumpfförmige Form hat und sich zwischen der Antriebswelle (4) und der Oberfläche (16) erstreckt.

8. Pumpeneinheit nach einem der vorstehend aufgeführten Ansprüche, bei der die Dichtung (7) vom Kragen (30) aus axial vorspringt, um in einer fluiddichten Weise mit der Antriebswelle (4) gekoppelt zu sein.

9. Pumpeneinheit nach einem der vorstehend aufgeführten Ansprüche, bei der die Dichtung (7) einen im Wesentlichen U-förmigen Querschnitt hat.

## Revendications

1. Unité de pompe pour l'alimentation en carburant, préférablement en carburant diesel, d'un moteur à combustion interne, l'unité de pompe comprenant un corps de pompe (3) ; une pompe à piston pour alimenter le moteur à combustion interne en carburant ; une pompe à engrenages (2) pour alimenter la pompe à piston en carburant ; un arbre d'entraînement (4) qui est monté de manière à pouvoir tourner autour de son axe longitudinal (5) et actionner à la fois la pompe à piston et la pompe à engrenages (2) ; et au moins un joint annulaire (7) disposé entre le corps de pompe (3) et l'arbre d'entraînement (4) pour séparer deux chambres (8, 9) de manière étanche aux fluides, le carburant étant acheminé à au moins l'une de ces chambres ; et ladite unité de pompe étant **caractérisée en ce qu'**elle comprend également au moins un élément de renforcement (26) qui est monté à l'intérieur de l'une des chambres (8, 9) afin d'au moins limiter la déformation du joint (7) résultant de la pression du carburant et **en ce que** le corps de pompe (3) comprend une gorge (28) qui s'étend autour dudit axe (5), l'élément de renforcement (26) comprenant une bague de retenue (27) qui est attachée dans ladite gorge (28) et un collier (30) qui fait saillie axialement de la bague de retenue (27) et qui s'étend entre l'arbre d'entraînement (4) et le joint (7).

2. Unité de pompe selon la revendication 1, dans laquelle l'élément de renforcement (26) est attaché au corps de pompe (3).

3. Unité de pompe selon la revendication 1 ou 2, dans laquelle l'élément de renforcement (26) s'étend entre l'arbre d'entraînement (4) et le joint (7) afin d'au moins limiter les déformations radiales dudit joint (7).

4. Unité de pompe selon l'une quelconque des revendications précédentes, dans laquelle la pression du carburant dans une telle première chambre (9) est supérieure à la pression du carburant dans une telle deuxième chambre (8), l'élément de renforcement (26) étant disposé à l'intérieur de ladite deuxième chambre (8).

5. Unité de pompe selon l'une quelconque des revendications précédentes, dans laquelle l'élément de renforcement (26) présente une forme substantiellement annulaire.

6. Unité de pompe selon l'une quelconque des revendications précédentes, dans laquelle l'élément de renforcement (26) se présente sous la forme d'une bague ouverte qui est déformable élastiquement dans la direction circonférentielle.

7. Unité de pompe selon l'une quelconque des revendications précédentes, dans laquelle le joint (7) est délimité intérieurement par une surface au moins en partie substantiellement tronconique (16) qui est en regard de l'arbre d'entraînement (4), le collier (30) étant sous forme substantiellement tronconique et s'étendant entre l'arbre d'entraînement (4) et ladite surface (16).

8. Unité de pompe selon l'une quelconque des revendications précédentes, dans laquelle le joint (7) fait saillie axialement depuis le collier (30) afin d'être accouplé à l'arbre d'entraînement (4) de manière étanche aux fluides.

9. Unité de pompe selon l'une quelconque des revendications précédentes, dans laquelle le joint (7) présente une section transversale substantiellement en forme de U.
